(19) Europäisches Patentamt

European Patent Office

Office européen des brevets

(11) **EP 0 631 648 B1**

(12) **EUROPÄISCHE PATENTSCHRIFT**

(45) Veröffentlichungstag und Bekanntmachung des Hinweises auf die Patenterteilung:
**04.12.1996 Patentblatt 1996/49**

(21) Anmeldenummer: **92906613.2**

(22) Anmeldetag: **18.03.1992**

(51) Int Cl.⁶: **F02P 5/15**

(86) Internationale Anmeldenummer:
**PCT/EP92/00584**

(87) Internationale Veröffentlichungsnummer:
**WO 92/16741 (01.10.1992 Gazette 1992/25)**

(54) **KLOPFREGELUNG EINER FREMDGEZÜNDETEN BRENNKRAFTMASCHINE**

PINKING CONTROL IN A SPARK-IGNITION INTERNAL COMBUSTION ENGINE

REGULATION DU CLIQUETIS DANS UN MOTEUR A COMBUSTION INTERNE A ALLUMAGE COMMANDE

(84) Benannte Vertragsstaaten:
**DE FR GB**

(43) Veröffentlichungstag der Anmeldung:
**04.01.1995 Patentblatt 1995/01**

(73) Patentinhaber: **AUDI AG**
**85002 Ingolstadt (DE)**

(72) Erfinder:
• **PFALZGRAF, Bernhard**
**D-8070 Ingolstadt (DE)**
• **GIBTNER, Siegfried**
**D-8074 Gaimersheim (DE)**

(74) Vertreter: **Le Vrang, Klaus**
**AUDI AG,**
**Patentabteilung I/EXA,**
**Postfach 10 02 20**
**85002 Ingolstadt (DE)**

(56) Entgegenhaltungen:
**EP-A- 0 101 342**    **EP-A- 0 326 193**
**WO-A-89/12746**    **WO-A-91/10829**
**WO-A-91/14097**    **DE-A- 4 008 170**
**FR-A- 2 511 435**    **GB-A- 2 205 608**
**GB-A- 2 231 917**    **GB-A- 2 231 920**
**US-A- 4 829 962**

**Beschreibung**

Die Erfindung betrifft eine Klopfregelung einer fremdgezündeten Brennkraftmaschine nach dem Oberbegriff des Anspruchs 1.

Für den optimierten Betrieb einer fremdgezündeten Brennkraftmaschine ist es erforderlich, den Zündzeitpunkt in Abhängigkeit der Drehzahl und Last zu verändern. Dazu ist es bekannt, in einem Kennfeld einer elektronischen Motorsteuereinrichtung Kennfeldvorgaben in Abhängigkeit der Drehzahl und Last abzulegen, die für einen aktuellen Zündzeitpunkt jeweils ausgelesen werden.

Eine weitere, bekannte Optimierung hinsichtlich eines geringen Kraftstoffverbrauchs und geringen Schadstoffausstoßes wird dadurch erreicht, daß die Brennkraftmaschine im höheren Lastbereich nahe an der Klopfgrenze betrieben wird. Da die Lage der Klopfgrenze von Betriebsparametern, insbesondere der Treibstoffqualität, der Temperatur und des Luftdrucks abhängt, ist es bekannt, eine Klopfregelung in der Art einer Kurzzeitregelung durchzuführen (FR-A-2 511 435).

Dabei wird beim Auftreten von Klopfereignissen die aus dem abgelegten Kennfeld ausgelesene Kennfeldvorgabe jeweils um einen Schritt durch einen Spät-Korrekturwert zu einem Regelhub auf einen Wert für einen aktuellen Zündzeitpunkt in Richtung Spätzündung zurückgenommen. Beim weiteren Ausbleiben von Klopfereignissen wird der Wert für den aktuellen Zündzeitpunkt schrittweise durch einen Früh-Korrekturwert wieder in Richtung Frühzündung auf die Kennfeldvorgabe hin zurückgeführt.

Diese Kurzzeitregelung ist somit auf das Niveau der abgelegten Kennfeldvorgabe bezogen. Bei ungünstigen Betriebsparametern, insbesondere bei schlechter Kraftstoffqualität, kann die Klopfgrenze relativ weit von der Kennfeldvorgabe weg liegen, so daß die Regelung mit entsprechend großen Regelhüben und großer Regelbandbreite betrieben wird. Dies ist für die Stabilität der Regelung ungünstig, so daß für die Regelung relativ viele klopfende Verbrennungen mit teilweise heftigen Klopfern in Kauf genommen werden müssen. Dies belastet sowohl das Material als auch einen optimalen Betrieb sowie den akustischen Komfort durch teilweise hörbare Klopfer.

Die Kurzzeitregelung stellt sich mit bestimmten Regelhüben für einen gerade gefahrenen Kennfeldbereich mit bestimmter Drehzahl und Last ein. Wenn dieser Kennfeldbereich verlassen wird und ein anderer Kennfeldbereich angefahren wird, ändert sich üblicherweise auch die aus dem Kennfeld ausgegebene Kennfeldvorgabe, die dann dem neuen Kennfeldbereich entspricht. Damit muß sich auch die Kurzzeitregelung auf diese neuen Gegebenheiten wieder einstellen, d.h. daß bei ungünstigen Übergangsverhältnissen relativ viele klopfende Verbrennungen mit teilweise heftigen Klopfern in Kauf genommen werden müssen, bis sich die Kurzzeitregelung wieder auf den neuen Kennfeldbereich optimal eingestellt hat.

Es ist allgemein bekannt, daß eine kalte Brennkraftmaschine nicht so klopfanfällig wie im betriebswarmen Zustand ist.

Es ist weiter bekannt, mehrere, vorgegebene und von vornherein bestimmte Kennfelder abzulegen und je nach Bedarf zur Verfügung zu stellen. Dazu ist es beispielsweise bekannt, von einem bestimmten Kennfeld, das dem Betrieb mit Superkraftstoff zugeordnet ist, durch Umstecken eines Steckers im Motorraum auf ein zweites, vorbestimmtes Kennfeld überzugehen, das beim Betrieb mit Normalkraftstoff zu verwenden ist.

Es ist auch bekannt, solche Kennfeldumschaltungen automatisch durchzuführen, wenn eine große Anzahl von Klopfereignissen registriert wird. Bei diesen Umschaltungen handelt es sich aber in jedem Fall um eine von vornherein vorgegebene, globale Änderung bzw. Zurücknahme des Zündzeitpunkts für das gesamte Motorkennfeld mit vielen Klopfereignissen bei den Übergängen.

Eine Langzeitanpassung ist außerdem aus dem Dokument US-A-4 829 962 bekannt.

Aufgabe der Erfindung ist es demgegenüber, die Anzahl von Klopfereignissen zu verringern, die Klopfregelung insgesamt stabiler zu halten und den Betrieb der Brennkraftmaschine weiter zu optimieren.

Diese Aufgabe wird mit den Merkmalen des Anspruchs 1 gelöst.

Gemäß Anspruch 1 wird die Langzeit-Anpassung in der Weise ausgeführt, daß die Kennfeldvorgabe bei auftretenden Klopfereignissen um einen Anpassungswert von der Klopfgrenze weg zurückgenommen bzw. modifiziert wird, so daß die Kurzzeitregelung auf eine neue Zündzeitpunktvorgabe (Kennfeldvorgabe plus Anpassungswert) bzw. ein anderes Niveau bezogen ist. Die Anpassungswerte werden dabei in Abhängigkeit der auftretenden Klopfereignisse innerhalb bestimmter, sich wiederholender Beobachtungszeitintervalle ermittelt.

Damit wird vorteilhaft das Bezugsniveau für die Regelung innerhalb der sich wiederholenden Beobachtungszeitintervalle und in Abhängigkeit der darin auftretenden Klopfereignisse neu ermittelt, wobei der Regelbereich bzw. die Regelbandbreite und damit die Klopfgrenze nur in geringem Abstand von diesem Bezugsniveau liegen soll. Die Lage dieses Bezugsniveaus wird dadurch verändert, daß den Werten aus dem abgelegten Kennfeld geeignete, ermittelte Anpassungswerte zugeschlagen werden. Dieses kontinuierliche Nachziehen des Bezugsniveaus für die Kurzzeitregelung in Verbindung mit der Verringerung der Regelbandbreite führt insgesamt zu einer Reduzierung von Klopfereignissen und zu einer Reduzierung von heftigen Klopfern und dadurch sowohl zu einer akustischen Komfortverbesserung als auch Entlastung der Brennkraftmaschine. Zudem wird die gesamte Klopfregelung stabiler und damit leichter beherrschbar.

Für einen bestimmten Kennfeldbereich mit bestimmter Drehzahl und Last wird ein Anpassungswert entsprechend dem Abstand der aktuellen Zündzeitpunkte von der Kennfeldvorgabe ermittelt. Dieser Anpassungswert wird beim Verlassen des aktuellen Kennfeldbereichs in einem Korrekturkennfeld abgelegt und als "gelernte" Korrekturgröße beim Wiederanfahren dieses Kennfeldbereichs ausgegeben und die Kennfeldvorgabe damit zur Vorsteuerung der Kurzzeitregelung beaufschlagt.

Die Klopfregelung enthält somit eine Art von Selbstlernprozeß, in dem zusätzlich zu den von Anfang an abgelegten Kennfeldvorgaben betriebsparameterabhängige Anpassungswerte für jeden angefahrenen Kennfeldbereich ermittelt und abgespeichert werden. Ein solcher Anpassungswert kann beispielsweise der Wert für die Zurücknahme des Zündzeitpunkts in Richtung Spätzündung sein, wenn gerade eine schlechtere Kraftstoffqualität getankt worden war. Der Anpassungswert wird hierbei ausgehend von der Kurzzeitregelung so ermittelt, daß er etwa dem Abstand der Klopfgrenze, d.h. etwa der Lage der aktuellen Zündzeitpunkte von der Kennfeldvorgabe entspricht. Wenn nun dieser Kennfeldbereich verlassen wurde und wieder neu angefahren wird, haben sich üblicherweise die Langzeitbedingungen, wie beispielsweise die getankte Kraftstoffqualität, nicht schlagartig und grundsätzlich geändert. Beim Wiederanfahren des Kennfeldbereichs wird daher die Kennfeldvorgabe mit dem abgespeicherten Anpassungswert beaufschlagt, so daß die Regelung vorgesteuert ist und bereits in der Nähe der Klopfgrenze startet. Ohne die Vorsteuerung würde beim Anfahren eines neuen Kennfeldbereichs die Regelung üblicherweise in einem klopfenden Bereich entsprechend der Kennfeldvorgabe starten und mit einer Reihe von heftigen Klopfern aus diesem Bereich heraus regeln.

Zur Ermittlung von Langzeit-Korrekturwerten müssen die einzelnen Kennfeldbereiche jeweils angefahren werden. Ein Problem besteht darin, daß abgespeicherte Anpassungswerte für die Langzeit-Korrektur, die bei betriebswarmem Motor ermittelt und abgespeichert wurden, bei kaltem Motor nicht mehr zutreffen. Wie eingangs erwähnt, ist die Klopfneigung bei kalter Brennkraftmaschine geringer. Damit würde bei der Beibehaltung der Langzeit-Anpassung ein zweifach negativer Effekt erreicht: Einerseits sind die bei der betriebswarmen Brennkraftmaschine ermittelten Anpassungswerte für jeden mit kalter Brennkraftmaschine angefahrenen Kennfeldbereich nicht zutreffend und die Brennkraftmaschine wird hier mit einem nicht optimalen Wirkungsgrad gefahren. Zudem stellen sich die Anpassungswerte für die Langzeit-Korrektur über den Lernprozeß auf den kalten Betrieb ein und werden jeweils beim Verlassen des aktuellen Kennfeldbereichs abgespeichert. Wenn die später betriebswarme Brennkraftmaschine diesen Kennfeldbereich wieder anfährt, ist dafür ein für den kalten Betrieb festgestellter Anpassungswert abgespeichert, der zu erhöhter Klopfneigung führt und erst anschließend wieder nachkorrigiert werden kann.

Zur Behebung dieses Problems wird daher erfindungsgemäß vorgeschlagen, daß die im Kennfeld gespeicherten Anpassungswerte auch beim Abstellen der Brennkraftmaschine und beim Abkühlen gespeichert bleiben und beim Wiederanlassen weiter zur Verfügung stehen. Die Anpassungswerte werden jedoch nur bei betriebswarmer Brennkraftmaschine ermittelt oder Änderungen an abgespeicherten Anpassungswerten durchgeführt. Zweckmäßig wird der betriebswarme Zustand der Brennkraftmaschine über einen Temperaturschwellwertgeber festgestellt, der bevorzugt die Kühlwassertemperatur erfaßt. Bei kalter Brennkraftmaschine bzw. einer Kühlwassertemperatur unter dem Temperaturschwellwert werden die Anpassungswerte nicht verändert, sondern die bei betriebswarmer Brennkraftmaschine ermittelten und abgespeicherten Anpassungswerte (sofern für die entsprechend gefahrenen Kennfeldbereiche vorhanden) für die Langzeit-Anpassung herangezogen.

Diese bis zum Temperaturschwellwert unverändert verwendeten Anpassungswerte werden bewertet und jeweils mit einem kleineren Wert für die Langzeit-Korrektur zur Verfügung gestellt. Diese Verringerung der abgespeicherten Anpassungswerte trägt einerseits der reduzierten Klopfneigung der Brennkraftmaschine bei niederen Temperaturen Rechnung, so daß im Mittel ein früherer Zündwinkel erreicht und die Brennkraftmaschine mit einem besseren Wirkungsgrad betrieben wird. Andererseits werden auch die für die einzelnen Kennfeldbereiche abgelegten Langzeit-Anpassungswerte, wie sie bei betriebswarmer Brennkraftmaschine ermittelt wurden, nicht verlernt und stehen nach der Aufwärmphase der Brennkraftmaschine oberhalb des Temperaturschwellwerts für das gesamte Kennfeld wieder zur Verfügung. Somit ist es nicht erforderlich, daß nach jedem Kaltstart der Lernprozeß für die Langzeit-Anpassung für jeden Kennfeldbereich beginnend mit einem ungünstigen Betrieb und ungünstigerem Regelverhalten bis zur Feststellung von geeigneten Anpassungswerten durchgeführt wird.

Als einfachste Ausführung einer Bewertung der Anpassungswerte im Sinne einer Reduzierung ist ein Abschalten aller Anpassungswerte bis zum Erreichen des Temperaturschwellwerts von beispielsweise ca. 80° C durchführbar. Bis dahin kann die Brennkraftmaschine mit den aus dem abgelegten Kennfeld erhaltenen Kennfeldvorgaben betrieben werden.

In einer weiteren, ebenfalls einfachen Ausführung kann eine Bewertung der Anpassungswerte durch Reduzierung um einen festen Prozentsatz bis zum Erreichen des Temperaturschwellwerts durchgeführt werden.

In einer besser abstimmbaren, bevorzugten Ausführungsform nach Anspruch 2 wird die Bewertung der Anpassungswerte bei kalter Brennkraftmaschine bzw. unter dem Temperaturschwellwert dergestalt durchgeführt, daß in einer Kennlinie über der Motortemperatur bis zum Temperaturschwellwert Prozentwerte kleiner 100 % abgelegt sind, mit denen die abgespeicherten Anpassungswerte verringert werden. Damit kann eine optimierte Anpassung der Bewertung für die Temperatur bis zum Temperaturschwellwert berücksichtigt werden. Über dem Temperaturschwellwert stehen dann die Anpassungswerte wieder mit ihrem vollen Betrag zur Verfügung. Zweckmäßig wird eine solche Kennlinie in Bereiche geteilt, wobei sich 16 Bereiche für eine gute Abstimmung als ausreichend erwiesen haben.

Zur Ermittlung der Anpassungswerte soll ein Beobachtungszeitintervall bzw. eine auswertbare Verweildauer an einem Kennfeldbereich mindestens etwa 500 Zündungen betragen.

In an sich bekannter Weise ist das abgelegte Kennfeld in Kennfeldbereiche entsprechend Drehzahl- und Lastbereichen aufgeteilt, denen jeweils dieselbe Kennfeldvorgabe zugeordnet ist. Entsprechend wird auch ein Korrekturkennfeld vorgesehen, wo entsprechenden Korrekturkennfeldbereichen dieselben Anpassungswerte zugeordnet sind, wodurch die erforderlichen Speicherplätze reduziert werden. Beispielsweise hat sich hierzu eine 8 x 8 Matrix mit 8 Last- und 8 Drehzahlstützpunkten als ausreichend erwiesen.

In einer einfachen Ausführung nach Anspruch 3 wird als Anpassungswert ein aktueller Regelhub, zweckmäßigerweise der letzte Regelhub vor dem Verlassen des jeweiligen Kennfeldbereiches erfaßt und abgespeichert.

Ein günstigerer Anpassungswert, der eine bessere Aussage über die Lage der Klopfgrenze ergibt, wird durch Mittelung von Regelhüben erhalten. Die Mittelung wird innerhalb eines bestimmten Beobachtungszeitintervalls oder der Verweildauer in einem Kennfeldbereich durchgeführt. Nach Anspruch 4 werden für die Mittelung jeweils vorliegende Regelhübe zum Zeitpunkt eines Klopfereignisses herangezogen, während nach Anspruch 5 eine Mittelung über alle Regelhübe innerhalb eines Beobachtungszeitintervalls oder während der Verweildauer in einem bestimmten Kennfeldbereich durchgeführt wird. Beide Mittelungen ergeben eine geeignete, verwertbare Aussage über die Lage der Klopfgrenze und damit einen geeigneten Anpassungswert.

Die Klopfgrenze ist bekanntlich keine genau definierte Grenze, sondern als statistische Grenze zu sehen, wobei je nach der Qualität der gerade vorliegenden Verbrennung auch Klopfereignisse oberhalb oder unterhalb der ermittelten statistischen Klopfgrenze vorkommen können. Da somit die Lage der Klopfgrenze ohnehin keine genau definierte Größe darstellt, ist es zudem vorteilhaft, einen Anpassungswert nur dann im Korrekturfeld abzulegen bzw. einen alten Anpassungswert durch einen neuen zu ersetzen, wenn der Wert der Änderung der gemittelten Regelhübe über dem Wert einer festgelegten Schwelle liegt. Da eine Mittelung der Regelhübe nur innerhalb einer gewissen Verweildauer zu verwertbaren Ergebnissen führt, ist es weiter zweckmäßig, daß die Abspeicherung von Anpassungswerten nur dann erfolgt, wenn eine bestimmte Anzahl von Zündungen nicht unterschritten wurde.

Mit den bisher beschriebenen Maßnahmen wird die Kurzzeitregelung durch die Anpassungswerte von der abgelegten Kennfeldvorgabe in Richtung Spätzündung verschoben. Wenn die Klopfgrenze allmählich, beispielsweise durch Nachtanken von Treibstoff mit besserer Qualität, wieder in Richtung auf die ursprüngliche Kennfeldvorgabe wandert, sollen auch die für jeden Kennfeldbereich abgelegten Anpassungswerte wieder angepaßt und nachgezogen werden. Dies wird mit den Merkmalen nach Anspruch 6 erreicht, indem beim Ausbleiben oder bei wenigen Klopfereignissen der jeweilige Anpassungswert in einem bestimmten Kennfeldbereich wieder in Richtung auf die ursprüngliche Kennfeldvorgabe schrittweise um eine bestimmte Rückführgröße zurückgenommen wird.

Vorteilhaft werden nach Anspruch 7 jedem Zylinder der Brennkraftmaschine eigene Kennfelder zugeordnet und die Klopfregelung mit der erfindungsgemäßen Anpassung zylinderselektiv durchgeführt. Damit kann jeder der Zylinder separat im thermodynamischen Optimum betrieben werden, so daß Kraftstoffverbrauch und Schadstoffausstoß auf möglichst kleinem Niveau gehalten werden.

Nach Anspruch 8 ist für den ersten Motorstart vom Hersteller ein Initialisierungskennfeld vorgesehen, in dem global Anpassungswerte abgelegt sind, die sich nach dem ersten Anfahren des entsprechenden Kennfeldbereichs im Sinne des erfindungsgemäßen Lernprozesses selbsttätig ändern und korrigieren.

Anhand der Zeichnung wird die Erfindung näher erläutert.

Es zeigen

Fig. 1 ein Diagramm, das die Lage der Klopfgrenze in Abhängigkeit der Last und des Zündwinkels zeigt,

Fig. 2 ein Diagramm, in dem die Anpassung eines Bezugsniveaus ($\alpha_{LZ}$) für eine Kurzzeitregelung eingetragen ist und

Fig. 3 eine Kennlinie über der Motortemperatur mit Bewertungsgrößen.

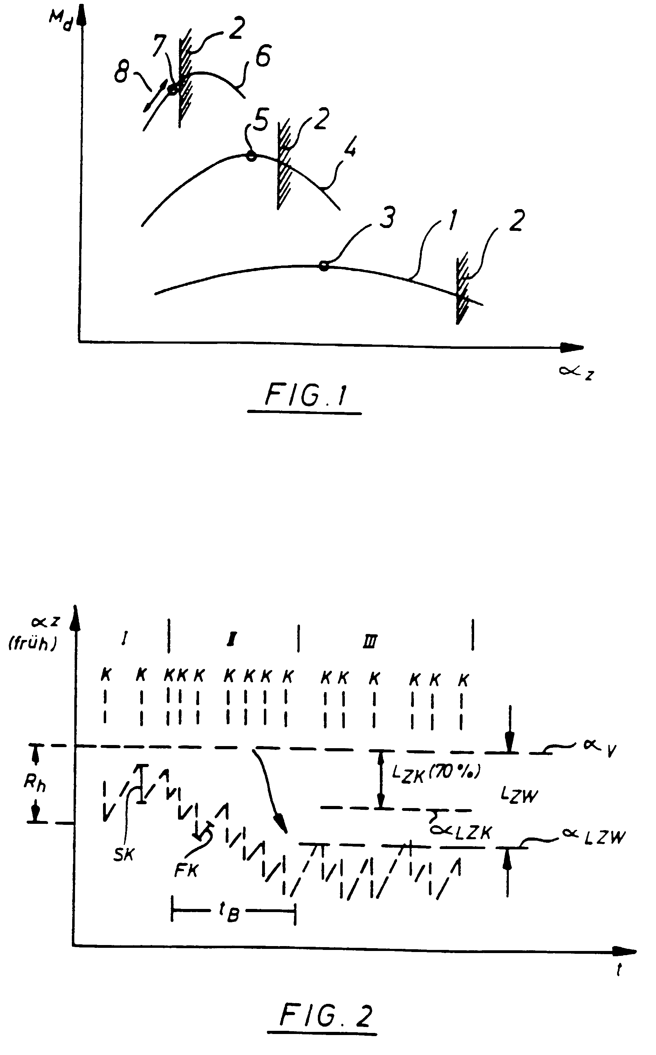

In Fig. 1 ist die Abhängigkeit des Drehmoments von der Zündzeitpunkteinstellung $\alpha_z$ angegeben. Bei geringer Last ist die Kurve 1 relativ flach und die Klopfgrenze 2 liegt weit vom Maximum der Kurve 1 ab. Die Brennkraftmaschine wird zweckmäßig am Punkt 3, d.h. im Maximum betrieben, wobei keine klopfenden Verbrennungen auftreten.

Die Kurve 4 stellt etwa den Halblastbereich dar, ist stärker gekrümmt und die Klopfgrenze 2 ist näher an den Maximumpunkt 5, in dem die Brennkraftmaschine optimal betrieben wird, herangerückt. Bei entsprechender Steuerung sind aber auch hier keine klopfenden Verbrennungen zu befürchten.

Die Kurve 6 stellt den Vollastbereich dar, wobei die Klopfgrenze 2 vor dem Maximum liegt, d.h. im Bereich zwischen den Kurven 4 und 6 sind bei optimiertem Betrieb Klopfereignisse zu erwarten, so daß auch für diesen Bereich die Klopfregelung aktiv ist. Auf der Kurve 6 ist der optimale Betriebspunkt 7 eingezeichnet, der gerade kurz vor der Klopfgrenze 2 liegt. Der Doppelpfeil 8 soll das Herantasten der Zündzeitpunktvorgabe an diesen Punkt 7 mit Hilfe der Kurzzeitregelung andeuten.

Im Diagramm der Fig. 2 ist nach oben der Wert des Zündwinkels $\alpha_z$ mit der Richtung nach früher Zündung über die nach rechts weisende Zeitachse aufgetragen. Die obere, horizontal verlaufende, strichlierte Linie entspricht einer Kennfeldvorgabe $\alpha_V$ für den Zündzeitpunkt aus einem fest abgelegten Kennfeld für einen bestimmten Kennfeldbereich. Diese Kennfeldvorgabe $\alpha_V$ ist so gewählt, daß die Brennkraftmaschine bei üblichen Betriebsbedingungen nahe an der Klopfgrenze betrieben wird und somit vereinzelt Klopfereignisse auftreten können.

Dieser Zustand ist für einen betriebswarmen Motor über einem Kühlwasser-Schwellwert von 80° C im Zeitintervall I dargestellt, wo mit Hilfe einer an sich bekannten und nicht explizit beschriebenen Kurzzeitregelung diese Kennfeldvorgabe beim Auftreten von Klopfereignissen K um einen Schritt durch einen Spät-Korrekturwert SK auf einen Regelhub $R_h$ für einen aktuellen Zündzeitpunkt in Richtung "spät" zurückgenommen wird. Bei einem weiteren Ausbleiben von Klopfereignissen wird dann der Wert für den aktuellen Zündzeitpunkt um einen Schritt durch einen Früh-Korrekturwert FK in Richtung Frühzündung wieder auf die Kennfeldvorgabe $\alpha_V$ hingeführt.

Durch Veränderungen von Betriebsparametern, beispielsweise nach dem Betanken und allmählichen Durchmischen mit einem Kraftstoff schlechterer Qualität treten im Zeitintervall II nacheinander vermehrt Klopfereignisse auf. Damit werden die aktuellen Zündzeitpunkte nacheinander weiter von der ursprünglichen Kennfeldvorgabe $\alpha_V$ in Richtung "spät" wegbewegt. Auf einem solchen Niveau $\alpha_{LZW}$, im Abstand $L_{ZW}$ von der Kennfeldvorgabe $\alpha_V$ (das einer geänderten Klopfgrenze entspricht), pendelt sich dann die Kurzzeitregelung wieder ein, wie dies im Zeitintervall III dargestellt ist. Der Wert $L_{ZW}$ entspricht einem um eine vorgegebene Schwelle verringerten Wert, der durch Mittelung der vorher in einem Beobachtungszeitintervall $t_B$ aufgetretenen Regelhübe ermittelt wird. Beim Verlassen des Kennfeldbereichs, für den der Verlauf des Zündzeitpunkts in Fig. 2 dargestellt ist, wird der Wert $L_{ZW}$ als Anpassungswert abgespeichert und bei einem erneuten Anfahren des Kennfeldbereichs sofort wieder ausgegeben, so daß die Regelung sofort ohne weitere Einschwingvorgänge weiterläuft.

Die bisher beschriebene Langzeit-Korrektur mit dem Anpassungswert $L_{ZW}$ trifft für den betriebswarmen Motor zu. Beim Abstellen und Abkühlen des Motors bleiben die im betriebswarmen Zustand für (möglichst alle) Kennfeldbereiche gespeicherten Anpassungswerte $L_{ZW}$ erhalten und stehen nach dem Wiederanlassen des kalten Motors sofort wieder zur Verfügung. Für einen optimalen Kaltbetrieb sind diese Werte jedoch zu groß und würden zudem durch den in Fig. 2 dargestellten Lernprozeß auf Werte verringert werden, die für den (später) betriebswarmen Motor zu klein sind.

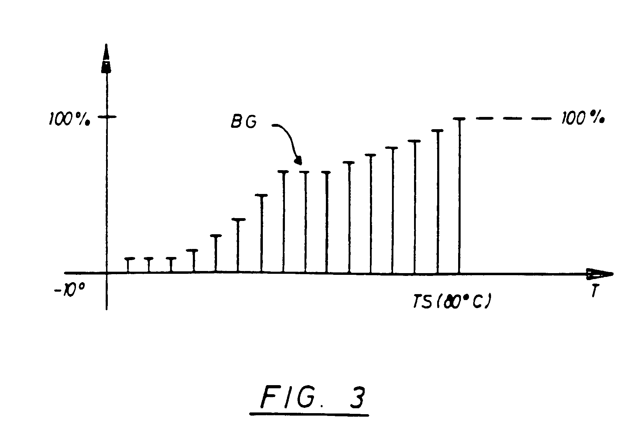

Erfindungsgemäß werden daher die bei betriebswarmem Motor (über 80° C Kühlwassertemperatur) abgespeicherten Anpassungswerte $L_{ZW}$ bis zum Erreichen der 80°-Schwelle durch Lernprozesse nicht verändert und lediglich im Temperaturbereich unter 80° C entsprechend der Kennlinie nach Fig. 3 bewertet.

In Fig. 3 ist der Kühlwassertemperaturbereich bis zum Temperaturschwellwert TS von 80° C in 16 Bereiche aufgeteilt, denen jeweils eine Bewertungsgröße kleiner als 100 % zugeordnet ist. Mit diesen Bewertungsgrößen werden entsprechend der gerade ermittelten Kühlwassertemperatur T die gespeicherten Anpassungswerte $L_{ZW}$ bewertet und für die Langzeit-Anpassung zur Verfügung gestellt. Über dem Temperaturschwellwert TS stehen die Anpassungswerte $L_{ZW}$ mit ihrem vollen Wert zur Verfügung.

In der Tendenz ist der Betrag der Bewertungsgrößen mit steigender Temperatur bis zum Temperaturschwellwert TS ansteigend, die einzelnen Temperaturbereiche können jedoch in ihrem speziellen Verhalten an die Gegebenheiten der Brennkraftmaschine angepaßt werden.

In Fig. 2 ist beispielhaft ein in Richtung Frühzündung verschobenes Langzeit-Niveau $\alpha_{LZK}$ nach dem Start einer Brennkraftmaschine dargestellt, wobei der abgespeicherte AnpasSungswert $L_{ZW}$ entsprechend einer Bewertungsgröße von 70 % aus dem Diagramm nach Fig. 3 zu einem Anpassungswert $L_{ZK}$ verkleinert ist. Die Kurzzeitregelung wäre für diesen Fall dann auf das reduzierte Niveau $\alpha_{LZK}$ bezogen, das sich mit steigender Kühlwassertemperatur T entsprechend den Bewertungsgrößen aus Fig. 3 wieder dem Niveau $\alpha_{LZW}$ nähert und über dem Temperaturschwellwert TS wieder dieses Niveau $\alpha_{LZW}$ einnimmt.

Damit werden für einen betriebswarmen Zustand abgespeicherte Anpassungswerte nicht verlernt und die Brennkraftmaschine kann bereits nach dem Start mit (bewerteten) Anpassungswerten aus einer Langzeit-Anpassung optimiert betrieben werden.

**Patentansprüche**

1. Klopfregelung einer fremdgezündeten Brennkraftmaschine,

    mit einer Kurzzeitregelung, bei der aus einem in Abhängigkeit von Betriebsparametern fest abgelegten Kennfeld eine Kennfeldvorgabe ($\alpha_V$) für den Zündzeitpunkt jeweils zu einem bestimmten Kennfeldbereich der Brennkraftmaschine erfolgt,

beim Auftreten von Klopfereignissen (K) diese Kennfeldvorgabe ($\alpha_V$) jeweils um einen Schritt durch einen Spät-Korrekturwert (SK) zu einem Regelhub ($R_h$) auf einen Wert für einen aktuellen Zündzeitpunkt in Richtung "spät" modifiziert wird und

beim Ausbleiben von Klopfereignissen (K) der Wert für den aktuellen Zündzeitpunkt jeweils um einen Schritt durch einen Früh-Korrekturwert (FK) zu einem Regelhub ($R_h$) in Richtung "früh" wieder auf die Kennfeldvorgabe hingeführt wird,

dadurch gekennzeichnet,

daß eine zusätzliche Langzeit-Anpassung in der Weise ausgeführt ist,

daß die Kennfeldvorgabe ($\alpha_V$) bei auftretenden Klopfereignissen (K) um einen Anpassungswert ($L_{ZW}$ bzw. $L_{ZK}$) von der Klopfgrenze weg zurückgenommen bzw. modifiziert wird, so daß die Kurzzeitregelung auf eine neue, langzeitkorrigierte Zündzeitpunktvorgabe (Kennfeldvorgabe plus Anpassungswert) bzw. ein anderes Niveau ($\alpha_{LZW}$ bzw. $\alpha_{LZK}$) bezogen ist,

daß innerhalb bestimmter, sich wiederholender Beobachtungszeitintervalle ($t_B$) jeweils die Anpassungswerte ($L_{ZW}$) in Abhängigkeit der auftretenden Klopfereignisse (K) ermittelt und in einem Lernprozeß gelernt werden,

daß ein gelernter, neuer Anpassungswert ($L_{ZW}$) für einen bestimmten, gerade gefahrenen Kennfeldbereich ermittelt wird, beim Verlassen dieses Kennfeldbereichs in einem zugeordneten Korrekturkennfeld abgelegt und gespeichert wird und dieser Anpassungswert ($L_{ZW}$) als gelernte Korrekturgröße beim Wiederanfahren dieses Kennfeldbereichs ausgegeben und für eine Korrektur der Kennfeldvorgabe wieder zur Verfügung gestellt wird,

daß die im Kennfeld gespeicherten Anpassungswerte ($L_{ZW}$) auch beim Abstellen der Brennkraftmaschine gespeichert bleiben und beim Wiederanlassen weiter zur Verfügung stehen,

daß die Anpassungswerte ($L_{ZW}$) nur bei betriebswarmer Brennkraftmaschine, das heißt über einem bestimmten Temperaturschwellwert (TS) bevorzugt von der Kühlwassertemperatur, ermittelt oder Änderungen an abgespeicherten Anpassungswerten ($L_{ZW}$) durchgeführt werden,

daß bei kalter Brennkraftmaschine bzw. unter dem bestimmten Temperaturschwellwert (TS) die bei betriebswarmer Brennkraftmaschine ermittelten Anpassungswerte ($L_{ZW}$) bewertet und jeweils mit einem kleineren Wert als reduzierter Anpassungswert ($L_{ZK}$) für die Langzeit-Korrektur zur Verfügung gestellt wird.

2. Klopfregelung nach Anspruch 1, dadurch gekennzeichnet, daß die Bewertung der Anpassungswerte ($L_{ZW}$) bei kalter Brennkraftmaschine dergestalt erfolgt, daß in einer Kennlinie über der Motortemperatur (T) bis zum Temperaturschwellwert (TS), bevorzugt in ca. 16 Bereichen Bewertungsgrößen (BG) als Prozentwerte kleiner 100 %, abgelegt sind, mit denen die entsprechenden Anpassungswerte ($L_{ZW}$) verringert werden, wobei über dem Temperaturschwellwert (TS) die vollen Anpassungswerte ($L_{ZW}$) zur Verfügung gestellt werden.

3. Klopfregelung nach Anspruch 1 oder 2, dadurch gekennzeichnet, daß als Anpassungswert ($L_{ZW}$) ein aktueller Regelhub ($R_h$) vor dem Verlassen des Kennfeldbereichs verwendet wird.

4. Klopfregelung nach Anspruch 1 oder 2, dadurch gekennzeichnet, daß der Anpassungswert ($L_{ZW}$) durch Mittelung der jeweils zum Zeitpunkt eines Klopfereignisses vorliegenden Regelhübe ($\overline{R_h}$) in einem Beobachtungszeitintervall ($t_B$) oder der Verweildauer im bestimmten Kennfeldbereich erhalten wird.

5. Klopfregelung nach Anspruch 1 oder 2, dadurch gekennzeichnet, daß der Anpassungswert ($L_{ZW}$) durch Mittelung aller in einem Beobachtungszeitintervall ($t_B$) oder der Verweildauer am bestimmten Kennfeldbereich vorliegenden Regelhübe ($\overline{R_h}$) erhalten wird.

6. Klopfregelung nach einem der Ansprüche 1 bis 5, dadurch gekennzeichnet, daß beim Ausbleiben oder wenigen Klopfereignissen (K) innerhalb wenigstens eines Beobachtungszeitintervalls ($t_B$) oder der Verweildauer im bestimmten Kennfeldbereich der Anpassungswert ($L_{ZW}$) in Richtung auf die ursprüngliche Kennfeldvorgabe ($\alpha_V$) jeweils schrittweise um eine bestimmte Rückführgröße ($\Delta L_K$) zurückgeführt wird.

7. Klopfregelung nach einem der Ansprüche 1 bis 6, dadurch gekennzeichnet, daß für jeden Zylinder der Brennkraftmaschine eine zylinderselektive Klopfregelung vorgesehen ist.

8. Klopfregelung nach einem der Ansprüche 1 bis 7, dadurch gekennzeichnet, daß für einen ersten Motorstart ein Initialisierungskennfeld vorgesehen ist.

## Claims

1. Knock control on a spark-ignition internal combustion engine,

with short-time control involving the use of a map permanently stored in dependence on operating parameters to pre-specify a map ($\alpha_V$) for the ignition point for a respective given map range of the internal combustion engine,

if knocking episodes (K) occur, this pre-specified map ($\alpha_V$) is modified in the "retard" direction by one respective increment using a "retard" correction factor (SK) on a control stroke ($R_h$), to a value for a current ignition point, and

in the absence of knocking episodes (K), the value for the current ignition point is moved back in the "advance" direction towards the pre-specified map, by one respective increment using an "advance" correction factor (FK) on a control stroke ($R_h$),

characterised in that

additional long-time adaptation is performed in a manner whereby

whenever knocking episodes occur, the pre-specified map ($\alpha_V$) is moved back away from the knock limit, or modified, by an adaptation value ($L_{ZW}$ or $L_{ZK}$ respectively), with the result that the short-time control is based on a new, long-time-corrected, pre-specified ignition point (the pre-specified map plus the adaptation value) or another level ($\alpha_{LZW}$ or $\alpha_{LZK}$ respectively),

within given, repeated observation time intervals ($t_B$) in each case the adaptation values ($L_{ZW}$) are established in dependence on the knocking episodes (K) encountered and are learned in a learning process,

a learned, new adaptation value ($L_{ZW}$) is established for a given map range which has just been negotiated, is logged and stored in an associated correction map upon leaving this map range, and this adaptation value ($L_{ZW}$) is output as a learned corrective variable when the same map range is re-entered and is made available again for a correction to the pre-specified map,

the adaptation values ($L_{ZW}$) stored in the map also remain stored when the internal combustion engine is switched off and continue to be available when the engine is started up again,

the adaptation values ($L_{ZW}$) are only established, or changes made to stored adaptation values ($L_{ZW}$), when the internal combustion engine has warmed up, in other words above a given temperature threshold value (TS) of preferably the cooling water temperature,

when the internal combustion engine is cold, or rather below the given temperature threshold value (TS), the adaptation values ($L_{ZW}$) established while the internal combustion engine was warm are evaluated and in each case made available with a smaller value than the reduced adaptation value ($L_{ZK}$) for the long-time correction procedure.

2. Knock control according to claim 1, characterised in that evaluation of the adaptation values ($L_{ZW}$) when the internal combustion engine is cold involves logging evaluation factors (BG) as percentages below 100% in a characteristic curve over the engine temperature (T) up to the temperature threshold value (TS), preferably in approx. 16 ranges, and using the said evaluation factors (BG) to reduce the corresponding adaptation values ($L_{ZW}$), with the full adaptation values ($L_{ZW}$) being made available above the temperature threshold value (TS).

3. Knock control according to claim 1 or 2, characterised in that the adaptation value ($L_{ZW}$) used is a current control stroke ($R_h$) prior to leaving the map range.

4. Knock control according to claim 1 or 2, characterised in that the adaptation value ($L_{ZW}$) is obtained by averaging the respective control strokes ($R_h$) present at the time of a knocking episode over an observation time interval ($t_B$) or the delay period in the given map range.

5. Knock control according to claim 1 or 2, characterised in that the adaptation value ($L_{ZW}$) is obtained by averaging all the control strokes ($R_h$) present in an observation time interval ($t_B$) or the delay period in the given map range.

6. Knock control according to any of claims 1 to 5 characterised in that in the absence or near absence of knocking episodes (K) within at least one observation time interval ($t_B$) or the delay period in the given map range the adaptation value ($L_{ZW}$) is withdrawn, in each case stepwise by a given restore variable

($\Delta L_K$), in the direction of the original pre-specified map ($\alpha_V$).

7. Knock control according to any of claims 1 to 6, characterised in that there is provision for cylinder-selective knock control for each cylinder of the internal combustion engine.

8. Knock control according to any of claims 1 to 7, characterised in that an initialisation map is provided for the first occasion when the engine is started up.

**Revendications**

1. Réglage anti-cognement d'un moteur à combustion interne à allumage commandé,

comprenant un réglage instantané dans lequel il est produit, à partir d'un diagramme caractéristique établi de manière fixe en fonction de paramètres de marche, une valeur caractéristique initiale ($\alpha_V$) pour l'instant d'allumage, chaque fois pour une plage déterminée du diagramme caractéristique du moteur à combustion interne,

lors de la survenue de phénomènes de cognement (K), cette valeur caractéristique initiale ($\alpha_V$) est modifiée dans le sens du "retard", d'un pas chaque fois, par une valeur de correction par un retard (SK) pour une course de réglage ($R_h$), à une valeur destinée à un instant d'allumage effectif et

lors de la cessation des phénomènes de cognement (K), la valeur destinée à l'instant d'allumage effectif est ramenée dans le sens de "l'avance" à la valeur caractéristique initiale, d'un pas chaque fois, par une valeur de correction par une avance (FK) pour une course de réglage ($R_h$),

caractérisé en ce qu'une adaptation supplémentaire de longue durée est effectuée de la manière suivante:

lors de la survenue de phénomènes de cognement (K), la valeur caractéristique initiale ($\alpha_V$) est éloignée de la limite de cognement ou modifiée d'une valeur d'adaptation ($L_{ZW}$ ou $L_{ZK}$), de telle sorte que le réglage instantané est rapporté à une nouvelle valeur initiale d'instant d'allumage corrigée pour le long terme (valeur caractéristique initiale plus valeur d'adaptation) ou à un autre niveau ($\alpha_{LZW}$ ou $\alpha_{LZK}$), dans les limites d'intervalles d'observation déterminés ($t_B$) qui se répètent, les valeurs d'adaptation ($L_{ZW}$) sont déterminées chaque fois en fonction des phénomènes de cognement (K) qui surviennent et sont apprises en un processus d'apprentissage,

une nouvelle valeur d'adaptation ($L_{ZW}$) apprise est déterminée pour une plage déterminée du diagramme caractéristique qui vient juste d'être parcourue, elle est reportée et mémorisée dans un diagramme caractéristique de correction associé au moment où cette plage du diagramme caractéristique est quittée, et cette valeur d'adaptation ($L_{ZW}$) est extraite en tant que grandeur de correction apprise lorsque cette plage du diagramme caractéristique est parcourue de nouveau et elle est remise à disposition pour une correction de la valeur caractéristique initiale,

les valeurs d'adaptation ($L_{ZW}$) mémorisées dans le diagramme caractéristique restent en mémoire, même à l'arrêt du moteur à combustion interne, et elles sont de nouveau disponibles au redémarrage,

les valeurs d'adaptation ($L_{ZW}$) ne sont déterminées ou des modifications sur des valeurs d'adaptation ($L_{ZW}$) mémorisées ne sont effectuées que lorsque le moteur à combustion interne est chaud, c'est-à-dire au-dessus d'une certaine valeur de seuil de température (TS), de préférence de la température de l'eau de refroidissement,

lorsque le moteur à combustion interne est froid ou au-dessous de ladite valeur de seuil de température (TS) déterminée, les valeurs d'adaptation ($L_{ZW}$) déterminées lorsque le moteur à combustion interne est chaud sont évaluées et mises à disposition chaque fois avec une plus petite valeur en tant que valeur d'adaptation réduite ($L_{ZK}$) pour la correction à long terme.

2. Réglage anti-cognement selon la revendication 1, caractérisé en ce que l'évaluation des valeurs d'adaptation ($L_{ZW}$), lorsque le moteur à combustion interne est froid, est effectuée par le fait que des grandeurs d'évaluation (BG), au moyen desquelles les valeurs d'adaptation ($L_{ZW}$) correspondantes sont réduites, sont reportées sous forme de valeurs en pourcentage inférieures à 100%, sur une courbe caractéristique en fonction de la température du moteur (T), jusqu'à la valeur de seuil de température (TS), de préférence dans 16 plages environ, les valeurs d'adaptation ($L_{ZW}$) entières étant mises à disposition au-dessus de la valeur de seuil de température (TS).

3. Réglage anti-cognement selon la revendication 1 ou 2, caractérisé en ce qu'une course de réglage effective ($R_h$) est utilisée comme valeur d'adaptation ($L_{ZW}$) avant que la plage du diagramme caractéristique ne soit quittée.

4. Réglage anti-cognement selon la revendication 1 ou 2, caractérisé en ce que la valeur d'adaptation ($L_{ZW}$) est obtenue par établissement de la moyenne des courses de réglage ($R_h$) qui ont lieu chaque fois à l'instant d'un phénomène de cognement dans un intervalle de temps d'observation ($t_B$) ou pendant la durée de séjour dans la plage déterminée du diagramme caractéristique.

5. Réglage anti-cognement selon la revendication 1 ou 2, caractérisé en ce que la valeur d'adaptation ($L_{ZW}$) est obtenue par établissement de la moyenne de toutes les courses de réglage ($R_h$) qui ont lieu dans un intervalle de temps d'observation ($t_B$) ou pendant la durée de séjour dans la plage déterminée du diagramme caractéristique.

6. Réglage anti-cognement selon l'une quelconque des revendications 1 à 5, caractérisé en ce qu'en cas de cessation ou de peu de phénomènes de cognement (K) dans les limites d'au moins un intervalle de temps d'observation ($t_B$) ou pendant la durée de séjour dans la plage déterminée du diagramme caractéristique, la valeur d'adaptation ($L_{ZW}$) est ramenée chaque fois pas à pas d'une grandeur de retour déterminée ($\Delta L_K$) en direction de la valeur caractéristique initiale ($\alpha_V$).

7. Réglage anti-cognement selon l'une quelconque des revendications 1 à 6, caractérisé en ce qu'il est prévu, pour chaque cylindre du moteur à combustion interne, un réglage anti-cognement intervenant sélectivement pour le cylindre.

8. Réglage anti-cognement selon l'une quelconque des revendications 1 à 7, caractérisé en ce qu'il est prévu un diagramme caractéristique d'initialisation pour une première mise en marche du moteur.

FIG. 1

FIG. 2

## FIG. 3